# EUROPEAN PATENT APPLICATION

(11) **EP 3 835 979 A1**
(43) Date of publication of application: **16.06.2021**
(21) Application number: 20211622.4
(22) Date of filing: 03.12.2020
(51) Int. Cl.: G06F 21/16, H04N 21/8358

(54) **DELIVERING MEDIA CONTENT**

(30) Priority: 09.12.2019 GB 201918024
(71) Applicant: ZOO Digital Ltd, Sheffield S1 4LW (GB)
(72) Inventor: STONE, Elizabeth, Sheffield, S1 4LW (GB); BAYLISS, Christopher, Sheffield, S1 4LW (GB); FRANKLIN, Steven, Sheffield, S1 4LW (GB)
(74) Representative: EIP

(57) **Abstract**

An approach to delivering media content to a client computing device of a recipient is described. A server system is provided that is arranged to receive a request (210) identifying a media content segment, of a media content item comprising a plurality of identifiable media content segments, and a recipient. In response to the request, the server system uses recipient identification information to generate (220) a modified version of the media content segment that is attributable to the recipient. The server system then delivers (230) the modified version of the media content segment to the client computing device. The modification may be a watermarking, encryption, formatting, fingerprinting or encoding of the media segment.

## Description

### BACKGROUND OF THE INVENTION

### Field of the Invention

The present invention relates to delivering media content and, particularly, but not exclusively, to a system that delivers media content and a computer-implemented method of the same.

### Description of the Related Technology

During production of a media content item (for example, a film, a television show, an online video) several parties which are involved in the production process typically require access to the media content item. Often, the media content item is of a confidential or protected nature, for example, before public release, so providing the media content item to multiple parties presents a security risk. Equally, distribution of a media content item, for example, by a streaming entity, presents a security risk in that recipients of the media content item may share the media content item without being authorized to do so.

### SUMMARY

According to a first aspect of the present disclosure, there is provided a server system for delivering media content to a client computing device of a recipient, wherein the server system is arranged to: receive a request identifying a media content segment, of a media content item comprising a plurality of identifiable media content segments, and a recipient; in response to the request, use recipient identification information to generate a modified version of the media content segment that is attributable to the recipient; and deliver the modified version of the media content segment to the client computing device.

This server system provides a secure and efficient solution to delivering media content. The per-segment request provides flexibility in requesting, modifying, and delivering media content because the server system does not need to store state information relating to the requesting device or other requests. In this way, resources of the server system are not used to maintain a resource-intensive stateful session with a client device. The server therefore does not need to assign a certain amount of processing and storage resources for modifying a complete media content item and streaming said item to the client device, from beginning to end. In addition, the distinctive modification is in response to each request and is thus "on-demand" modification that is a "stateless" interaction, which provides client-specific content and deters unauthorised operations and thereby maintains the integrity of the media content item. Moreover, using the per-segment requests means the server system can quickly perform subsequent modification and delivery of the media content segment. Thus, processing resources are freed up at a quicker rate compared to when a server is required to modify a large portion of or an entire media content item and deliver it to a recipient. Flexibility is also achieved using per-segment requests because a recipient is able to request only segments that are of interest, for example, restricting requests to segments required for a specific processing task, rather than unnecessarily requesting a block including segments that are not required. In this way, non-linear playback is facilitated by the server system in an efficient way that does not waste processing and storage resources.

In one example, the request is one of a plurality of requests, each identifying the recipient and a respective segment of the plurality of identifiable media content segments, received by the server system at the same time.

In one example, the server system is arranged to generate the modified version of the media content segment by at least one of the following: watermarking; encryption; formatting, such as changing the resolution; fingerprinting; and encoding the media content segment.

In a further example, the request comprises the recipient identification information.

In another example, the recipient identification information comprises at least one of: an identifier of the computing device, a domain containing the computing device, a geolocation of the computing device, an IP address of the computing device, an identifier of a user of the computing device, and/or an organization to which the user of the device is affiliated.

In one example, the server is arranged to receive, from the client computing device, a request to access the media content item; and provide a master file to the client computing device, the master file comprising identifiers of the plurality of identifiable media content segments that can be requested.

In one example, the server is arranged to process the media content item to generate the plurality of identifiable media content segments.

According to a second aspect of the present disclosure, there is provided a method of delivering media content to a computing device. The method comprising: receiving, at a server system, a request identifying a media content segment of a media content item comprising a plurality of identifiable media content segments, and a recipient; in response to the request, generating, by the server system, a modified version of the media content segment using recipient identification information such that the modified media content segment is attributable to the recipient; and delivering, by the server system, the modified version of the media content segment to the client computing device.

This method provides a secure and efficient solution to delivering media content. The per-segment request provides flexibility in requesting, modifying, and delivering media content because the server system is not required to store state information relating to the requesting device or be aware of the state of other requests. In this way, there is no requirement for the server system to maintain a resource-intensive stateful session with a client device in which the server assigns a certain amount of processing and storage resources for modifying a complete media content item and streaming said item to the client device, from beginning to end. In addition, the distinctive modification is in response to each request and is thus "on-demand" modification that is a "stateless" interaction, which provides client-specific content and deters unauthorised operations and thereby maintains the integrity of the media content item. Moreover, using the per-segment requests means the subsequent modification and delivery of the media content segment occur quickly and thus processing resources are freed up at a quicker rate compared to when a large portion of or an entire media content item is modified and delivered to a recipient. Flexibility in requests is also provided using per-segment requests because a recipient is able to request only segments that are of interest, for example, restricting requests to segments required for a specific processing task, rather than unnecessarily requesting a block including segments that are not required. In this way, non-linear playback is facilitated by the method in an efficient way that does not waste processing and storage resources.

In one example, the request is one of a plurality of requests, each identifying the recipient and a respective segment of the plurality of identifiable media content segments, received by the server system and the method further comprises: generating a modified version of at least one of the plurality of identifiable media content segments.

In a further example, the method comprises streaming the modified media content segment via adaptive bitrate streaming.

According to a third aspect of the present disclosure there is provided a computer readable medium comprising instructions that, when executed by a processor, cause the processor to implement the aforementioned method of the second aspect.

This computer medium provides a secure and efficient solution to delivering media content. The per-segment request provides flexibility in requesting, modifying, and delivering media content because the computer medium is not required to store state information relating to the requesting device or be aware of the state of other requests. In this way, there is no requirement for the computer medium to maintain a resource-intensive stateful session with a client device in which the computer medium assigns a certain amount of processing and storage resources of a server system for modifying a complete media content item and streaming said item to the client device, from beginning to end. In addition, the distinctive modification is in response to each request and is thus "on-demand" modification that is a "stateless" interaction, which provides client-specific content and deters unauthorised operations and thereby maintains the integrity of the media content item. Moreover, using the per-segment requests means the subsequent modification and delivery of the media content segment occur quickly and thus processing resources are freed up at a quicker rate compared to when a large portion of or an entire media content item is modified and delivered to a recipient. Flexibility in requests is also provided using per-segment requests because a recipient is able to request only segments that are of interest, for example, restricting requests to segments required for a specific processing task, rather than unnecessarily requesting a block including segments that are not required. In this way, non-linear playback is facilitated by the computer medium in an efficient way that does not waste processing and storage resources.

Further features and advantages will become apparent from the following description of embodiments, given by way of example only, which is made with reference to the accompanying drawings.

### BRIEF DESCRIPTION OF THE DRAWINGS

Embodiments will now be described, by way of example only, with reference to accompanying drawings, in which:
Figure 1 is a schematic diagram of a system for delivering media content, according to an example.
Figure 2 is a flowchart of a method of delivering media content, according to an example.
Figure 3 is a schematic diagram of a segment modification processor, according to an example.
Figure 4 is a schematic diagram of a system for delivering content, according to a further example.
Figure 5 is a flowchart of a method of requesting media content, according to an example.
Figure 6 is a schematic diagram of interactions of a server system, according to a further example.
Figure 7 is a schematic diagram of interactions of a server system, according to a further example.
Figure 8 is a schematic diagram of interactions of a server system, according to a further example.

### DETAILED DESCRIPTION OF CERTAIN INVENTIVE EMBODIMENTS

During production of a media content item a plurality of parties may require access to the media content item in order to complete an assigned task, for example, adding subtitles to a video portion of the media content item or adding language dubbing tracks. Typically, in the production stage the media content item is highly confidential because, for example, it is not yet finished and/or has not yet been released to the public. In addition, distribution of a media content item by, for example, a streaming service, may intend the media content item to be viewed by only an authorized recipient of a media stream. Accordingly, the integrity of the media content item must be protected, and it is known to modify a media content item such that the modified version is specific or unique to a third party, which serves as a deterrent to the third party to share or copy the media content item, as it would be attributable to them. For example, a watermark specific to a third party can be added to multiple frames of a media content item. A conventional way to provide uniquely-modified media content is for a server to prepare a modified media content item in its entirety and in advance of delivery to a requesting party. The modified media content item is then provided to the requesting party. Alternatively, the server may stream a modified version of a media content item to a requesting party while the modifying process is still in progress and until the complete modified version has been received by the requesting party. These conventional approaches are achieved using a dedicated server that maintains a state of the requesting party and the streaming process and has a limited capacity for simultaneous third-party ("client") modification and streaming processes, each requiring significant resources of the server. In a scenario in which the modified media content item is prepared in full before streaming begins, the server is exposed to up-front processing costs and ongoing storage costs for however long the content item is deemed useful. There is also a delay in providing the modified media content item and, as a result, a delay before the media content item can be viewed.

Examples of the present invention aim to provide a flexible and efficient solution to providing modified media content to a client computer. According to examples, media content is requested, modified, and streamed on a per-segment basis. The present inventors have shown that such an approach can provide a flexible and secure way of obtaining modified media content on-demand whilst reducing demands on processing and storage resources.

### Providing media content to a computing device

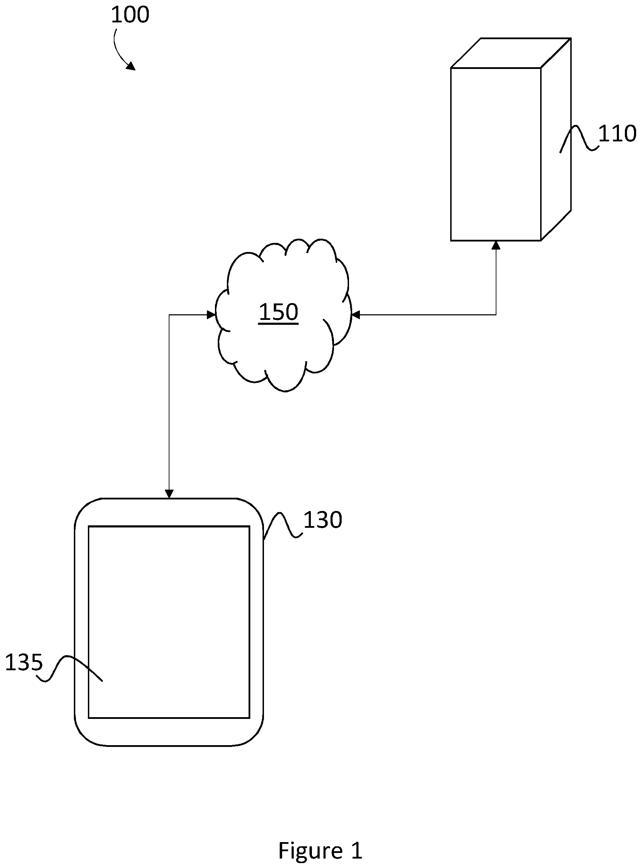

Figure 1 illustrates a system 100 for delivering media content from a server system 110 to a client computing device 130 via a network 150 according to an example.

It can be understood that media content may be in the form of a media content item comprising video and/or audio content, such as a film or a television program. According to examples, the media content item comprises a plurality of identifiable media content segments. The media content segments may be of fixed length, for example 10 seconds in duration, in some examples. In other examples, the media content segments may have a different fixed duration or be of varying length, for example from 2 to 20 seconds in duration. In any case, each media content segment may comprise at least one frame of the media content item.

The server system 110 is configured to deliver media content to the client computing device 130. The server system 110 may be a file server having at least one processor and a computer readable medium comprising instructions executable by the processor. The server system 110 may comprise one or a plurality of individual servers, which may for example cooperate or be coordinated to perform the overall operation of the server system 110.

The client computing device 130 is associated with an intended recipient of media content, where the recipient may be authorized to receive media content from the server system 110. A recipient may be an individual person, sometimes referred to as a "user", an IP address associated with a particular user, a plurality or group of users, such as an organization, company or sub-set thereof, a network, or a domain. The client computing device 130 executes a client application 135 that may be hosted by the server system 110. In the example of Figure 1, the client computing device 130 is a tablet computer. However, in other examples, the client computing device 130 may be a personal computer (PC), or a mobile phone, or a laptop computer.

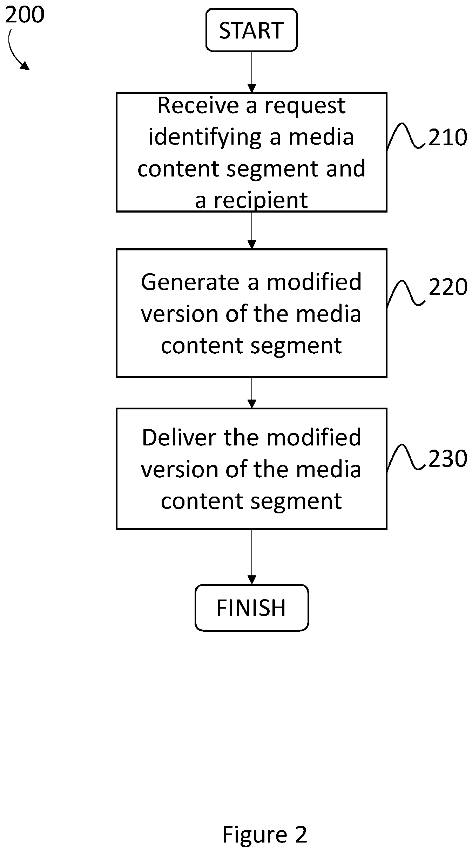

Figure 2 shows a computer-implemented method 200 of delivering media content to the client computing device 130 of Figure 1, according to an example. The method 200 is implemented by the server system 110 of Figure 1.

The method 200 starts at block 210, where the server system 110 receives a request identifying a media content segment and a recipient associated with the client computing device 130. In some examples, the request is received from the client computing device 130.

At block 220, the server system 110 uses recipient identification information to generate a modified version of the requested media content segment that is attributable to the recipient.

At block 230 the server system 110 delivers the modified version of the media content segment to the client computing device 130.

In some examples, the method 200, and specifically the delivery of the modified media content segment of block 230, may be performed via streaming, and in some cases, via adaptive bitrate streaming, for example, HTTP Live Streaming, in order to adjust the quality of the media content as it is being streamed to the client computing device 130. In the case of adaptive bitrate streaming, the request of block 210 may specify a particular bitrate version of the media content segment based on an appropriate bitrate, given the available bandwidth between the client computing device 130 and the server system 110. In one example, the server system 110 has at its disposal, following one or multiple requests to at least one other server, the media content segment in multiple resolutions (each version having a different bitrate) and modifies and delivers the requested bitrate version of the segment to the client 130. Alternatively, the server system 110, in response to the client's request for a particular bitrate version of a segment, obtains the requested bitrate version of the segment and subsequently modifies and delivers the segment to the client computing device 130. In any case, the requests for different bitrate versions made by the server system 110 are submitted and fulfilled either by a single server or by different servers that are running in parallel within or in communication with the server system 110.

After receiving one or more modified content segments, the client application 135 buffers the modified content segments in a memory or data store, performs any processes required to make the segments ready for playback, for example, by assembling the segments in the correct order or reversing some or part of the modification, for example, by decrypting a received encrypted segment, and then plays-back the content segments in sequence with one another. In some examples, the segments received by the client device 130 are cached to pre-empt rewinding or replaying during playback of the media content item.

The modified version, or modification performed by the server system 110 at block 220, is such that the modified media content and/or any playback of the media content segment, or playback of a copy of the media content segment, can be attributed to, for instance can be linked to or traced back to the recipient of the requested media content segment. The media content segment may be modified in a number of different ways to achieve this. In some examples, the modification to each media content segment associated with the same media content item is unique to the respective segment. Having a link to the recipient within the modified media content, and/or the recipient being derivable from the playback of the media content, acts as a deterrent against unauthorized sharing (for example, by sending or playing back the content to other parties) and/or copying of the content and advantageously makes the content more secure.

Returning to the method of modification, the media content segment may be modified to be indicative of or distinctive of the recipient or the media content segment may be modified for consistency with specific capabilities of the client computing device of the recipient, such as a screen size and a screen resolution. In some cases, the nature of the modification may mean that an attribution to the recipient, such as a user or organization, may be immediately evident. For example, the media content segment may be modified to include a visible watermark or symbol reflecting a name, logo or symbol that is easily attributable to a person or organization. In addition to or as an alternative to adding a visible watermark, the modification may be attributable to or connectable to the recipient in a less immediate or indirect way. For example, the modification may add a serial number watermark to the media content segment, and the serial number may be stored in a database that correlates the serial number to a respective person or organization. In another example, a watermark may be incorporated into a media content segment such that it is not immediately apparent or visible to a viewer. This kind of watermark may be referred to as a concealed or forensic watermark, requiring the media content to be forensically analysed to identify and extract the watermark. Fingerprinting may also be used to modify a media content segment, whereby the audio or video properties of a media content segment are identified and used to create a so-called "fingerprint" that uniquely identifies the media segment from others so that future unauthorized use of the media content segment can be detected. Other ways of modifying the media content segment to render it attributable to the recipient may be conceived of based on the present disclosure.

The modification at block 220 comprises at least one of the following: watermarking; encryption; formatting; fingerprinting; and encoding the media content segment, or at least a frame therein.

From a traceability perspective, watermarking using a mark that is attributable or unique to the recipient enables a recipient to be visually identified from one or more frames of the content, if, for example, the media content item is shared to other parties. A segment may be watermarked by embedding a fully or partially visible mark in one or more frames of the segment, whereby the mark is attributable or unique to the recipient of the segment. A segment can also be watermarked by embedding a so-called "invisible" watermark (sometimes referred to as steganography) into at least one frame of the segment, whereby the watermark is formed by replacing a number of existing pixels within a frame with encoded pixels that form a pattern, which isn't discernable by the human eye. In either case, the whole or part of a watermark may be present on several frames of media content; in the latter scenario the watermark is divided, and different parts are embedded into multiple, possibly successive, frames of content. This means any copied playback of the media content will contain the mark and be traceable to the recipient. It is understood that modifying a media content segment from a traceability perspective can also be achieved based on a session identifier. Specifically, whereby a modified media content segment is indicative of or distinctive of the session identifier, which, in itself identifies the recipient and one or more of: a location of the recipient; an IP address associated with the recipient; and an approximate time of viewing of the media content segment.
In relation to accessibility, a segment is encrypted using a key that is unique to the computing device, the recipient, or a session of the recipient. As an example, the segment can be encrypted based on a public-private key system, where a public key of the recipient is used to encrypt the segment and the computing device of the recipient decrypts the segment using a private key of the recipient. On the same accessibility point, a segment can be encoded to accommodate characteristics specific to the configuration of a computing device. Specifically, a segment is formatted based on one or more capabilities of the client computing device to which it is to be delivered. Similar to encoding, the media content segment may be formatted by the server system (as part of its modification) based on capabilities of a designated recipient device. For example, the server system may support multiple file formats and will choose the one that the recipient computing device can process most efficiently and/or conveniently. In the case of audio, if the recipient computing device supports Dolby (RTM) 5.1 Surround Sound or Dolby Atmos (RTM), then the server system may deliver for those formats since they are superior to other audio formats.

The encrypting, formatting and encoding processes are implemented primarily to change the media content segment in a way that is appropriate for the recipient device to receive it. As a secondary consideration, one or more of the encrypting, formatting and encoding may be reverse engineered to determine a likely subset of devices (for example, those that support the file format of the content) that may have been the source of unauthorised sharing or copying. For example, a recipient's public key used to encrypt a segment that is subsequently forwarded to unauthorized parties may be traced back to that recipient. In another example, a modified media content segment that is tailored to a specific client computing device may be traced back to a particular type of device having the capabilities based on which the media segment has been encoded or formatted or even a specific client computing device of an associated user.

In some examples, the identification information of the recipient is directly useable in modifying the requested media content segment before the segment is supplied to the device 130. For example, the recipient identification information may be used as basis for or form a watermark embedded into the segment. The identification information is specific and, often, uniquely related to the recipient. Accordingly, the identification information can be used to modify the requested media content segment in a way that is unique to recipient.

In any event, according to examples, the modification of content segments performed by the server system 110 uses on-demand processing, that is, processing a segment in response to a request for that specific segment.

The recipient identification information may be provided to the server system 110 by the client computing device 130, and, in cases where the client computing device 130 sends the request of block 210, as part of that request. In some examples, the recipient identification information may be obtained from another source, for instance another client computing device associated with the recipient, a third party name service, a credential server or some other kind of intermediary, or may even be allocated by the server system 110 at the start of a session. In any event, the identification information is such that the modified version of the media content segment is attributable to the recipient.

In examples, the recipient identification information comprises one or more of the following characteristics: an identifier of the client computing device 130; an identifier of the recipient, for example, a registered or authorized user of the client computing device 130; a date and time associated with the request for the media content segment; a bandwidth of a network connection of the client computing device 130; characteristics of the configuration of the client 130; an IP address of the client computing device 130; and a location, such as a GPS location, of the client computing device 130.

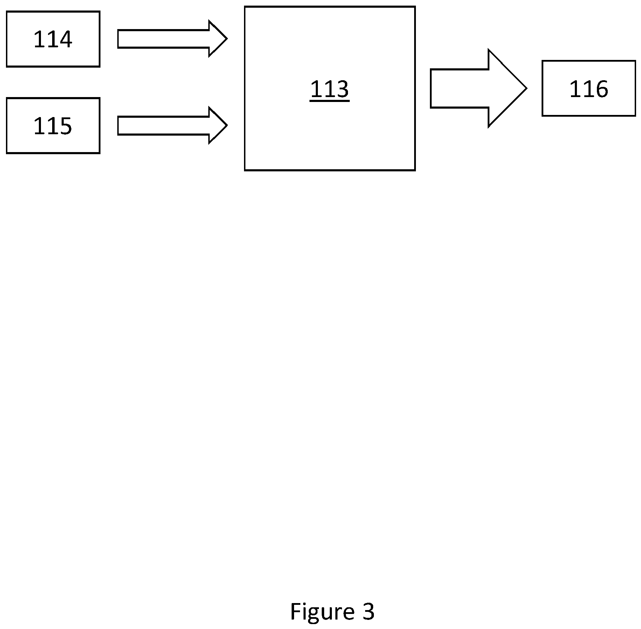

Figure 3 is a schematic diagram of a segment modification processor 113, according to an example. The segment modification processor 113 is part of the server system 110 and implements the modification of block 220 of Figure 2 by executing instructions provided by a computer readable medium (not shown).

The processor 113 receives a first input 114 that is the media content segment identified by a request received by the server system 110. The processor 113 receives a second input 115 that is the recipient identification information.

After receipt of the inputs 114 and 115, the processor 113 uses the second input 115 (recipient information) to modify the first input 114 (segment) to generate a modified media content segment 116. The processor 113 then outputs the modified segment 116 to the server system 110.

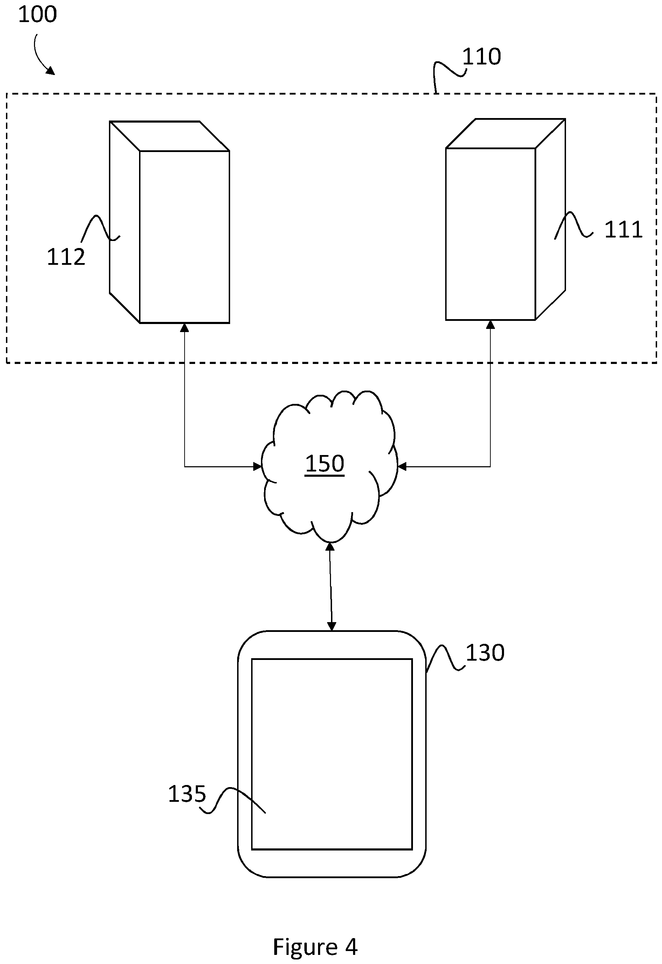

Figure 4 illustrates the system 100 of Figure 1 according to a further example, in which the server system 110 comprises a first server computer 111 and a second server computer 112. The first server computer 111, the second server computer 112,and the client computing device 130 communicate with one another via the network 150.

The first and second server computers 111, 112 are configured as part of the server system 110, for instance, the first server computer 111 can receive requests for media content segments and the second server computer 112 can generate modified media content segments, using the processor 113 of Figure 3, according to the requests. The second server computer 112 may be used when processing resources of the first server computer 111, without those of the second server computer 112, are restricted or nearing maximum capacity. In some examples, the server computer 112 may be part of or in communication with a server farm that is called upon by the server system 110 to provide additional resources, which may be implemented by a container service such as that provided by Amazon (RTM) Web Services: AWS Lambda (RTM).

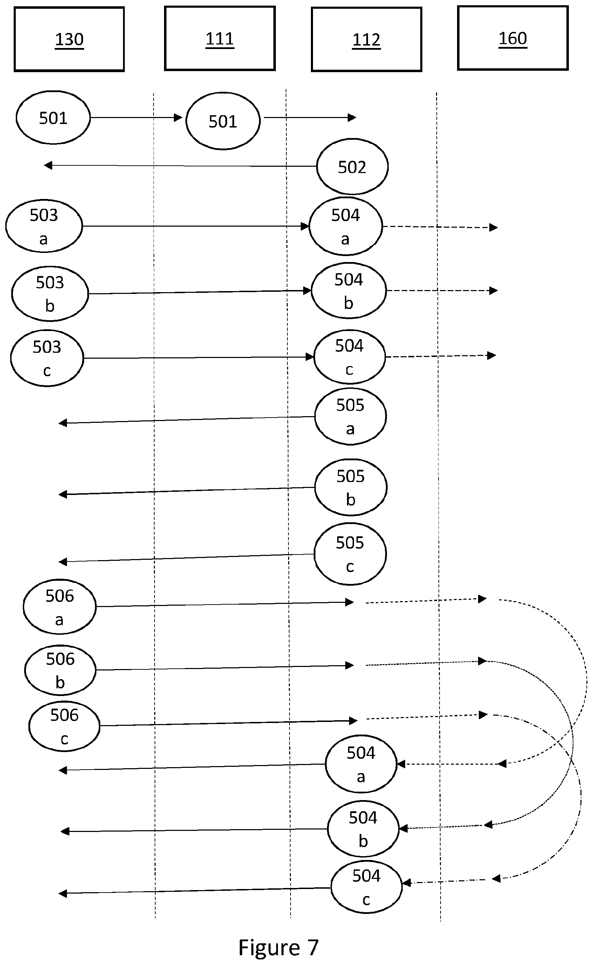

The server system 110 of Figure 4 is configured to implement the method 200 and the processor described in relation to Figures 2 and 3, respectively. In a slight variation, the system 100 may comprise a content delivery network in communication with the network 150 and directly with the second server computer 112 (described in relation to Figure 7).

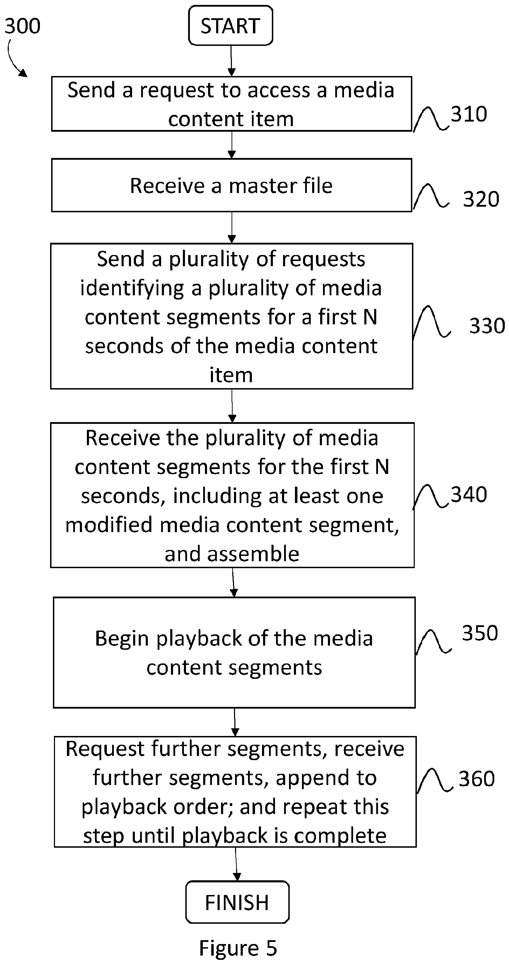

Figure 5 shows a computer-implemented method 300 of requesting media content from the server system 110. The method 300 is implemented by the client computing device 130 according to the example of Figure 1 or Figure 4 and is complementary to the method 200 described in relation to Figure 2 from the perspective of the server system 110.

The method 300 starts at block 310, where the client computing device 130 sends a request for access to a media content item to the server system 110. As discussed earlier, a media content item may comprise a plurality of identifiable media content segments. The request may explicitly request a master file relating to the media content item or otherwise identify the media content item.

After the request is received, the method proceeds to block 320 and the client computing device 130 receives a master file corresponding to the requested media content item from the server system 110. A master file (sometimes referred to as a "manifest" file) comprises identifiers for each of the plurality of media content segments within a media content item and also a playback order thereof. In some examples, the master file contains identifiers of audio and video files corresponding to content segments, each of which is an audio or video portion of the media content item. As an example, the master file may be a M3U8 file. The master file may contain a location identifier, such as a URL, for each segment to enable the client device 130 to directly access the segments. The playback order of the master file enables the client computing device 130 to correctly reproduce the media content item for playback.

At block 330, the client computing device 130 sends a plurality of requests identifying a plurality of media content segments (identified within the master file) and a recipient to the server system 110. The plurality of requests is sent by the client computing device 130 at a point in time after the master file has been provided to the client computing device 130 at block 320. The point in time may be a number of seconds, minutes or hours after receipt of the master file. The plurality of requests is for example for a plurality of segments associated with a first N seconds of the media content item from a current playback position on the client computing device 130. If the media content item is to be played back from the beginning, the current playback position of the media content item is the beginning, so the requested segments make up the first N seconds from the beginning of the media content item. As an example, the N seconds may be 100 seconds, which corresponds to the first 10 segments, assuming the media content item comprises 10 second segments, for both video and audio content.

Each request of the plurality of requests is independent from others, for instance, each request is self-contained and does not refer to a preceding or succeeding segment or request, nor to a previous or future state of the client computing device 130. In this regard, the requests and subsequent transmittal of media content segments can be considered by the server system 110 as "stateless" interactions that do not require the server system 110 to maintain a state of the client computing device 130 or a state of playback thereon. In one example, the client computing device 130 transmits at least some of the plurality of requests of block 330 in parallel, that is, at the same time, as other requests of block 330, followed by requests that are associated with segments later on in the portion of the media content item (see block 360).

Next, at block 340, the client computing device 130 receives, from the server system 110, the plurality of media content segments for the first N seconds, including a modified version of at least one identified media content segment within the N seconds, and assembles the segments for playback based on the playback order of the master file. Not all of the identified media content segments are necessarily modified before being received by the client computing device 130. The modification process may be the same as that described in relation to Figure 2, that is, using recipient identification information. In the example of Figure 5, the recipient identification information may be provided in each of the plurality of requests or in an initial request of several requests within a session related to a particular portion(s) of the media content item. In the latter case, the recipient identification information may be stored as a session variable. At least a portion of the plurality of media content segments received at block 340 may be received in parallel with one another, so at the same time. Where a modified media content segment is received at the client computing device 130, this may be received after other non-modified segments due to the time taken to complete the modification process and the timing of the initial requests of block 330. Each segment provided by the server system 110 to the client computing device 130 is sent in a separate response message so there is a one-to-one relationship between segment requests and segment responses.

At block 350, the client computing device 130 begins playback of the ordered media content segments, starting from the first media content segment within the first N seconds of the media content item.

At block 360, the client computing device 130 requests further media content segments from the server system 110 by submitting per-segment requests in the same way as in block 330, where the further segments immediately follow the latest media content segment within the N seconds of the media content item that has already been requested at block 330. Upon receipt, the client computing device 130 appends the further segments to the playback order based on the master file received at block 320. This step is repeated until payback of the media content item, or a requested portion thereof, is complete.

The requests submitted to the server system 110 at block 360 are sent when playback of the already received segments of block 340 progresses to a predetermined point within the media content item, which can be defined in terms of the number of received segments that have been played back or a number of seconds of playback, the latter not being limited to discrete segment intervals. For example, when a first of the received segments has been played back or after 15 seconds of the media content item has been played back. In this way, the server system 110 and the client computing device 130 provide seamless playback of media content despite respectively receiving and sending multiple requests for media content segments at different times.

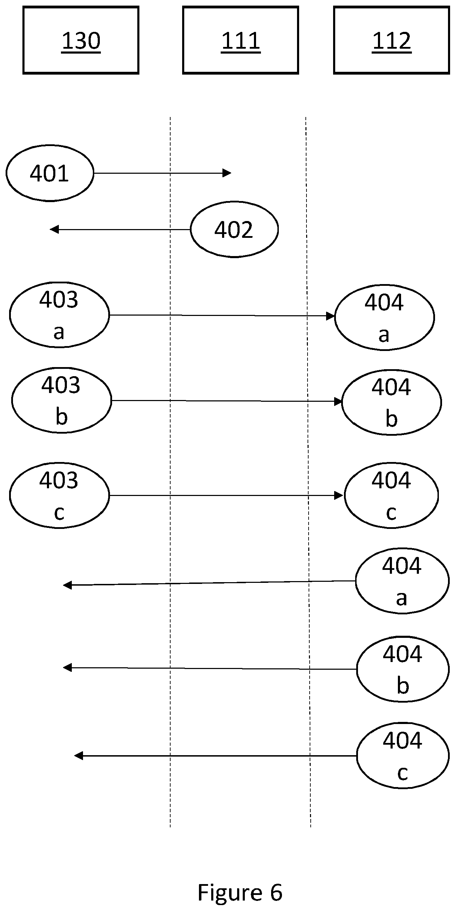

Figure 6 is a schematic diagram illustrating interactions of the server system 110 in delivering media to the client computing device 130, according to an example.

The client computing device 130 sends, to the first server computer 111, a request 401 to access a media content item. The first server computer 111 provides a manifest file 402, corresponding to the media content item, to the client computer device 130. Based on the manifest file 402, the client computing device 130 generates and transmits a plurality of requests 403a-c to the second server computer 112, each request identifying a media content item identified in the manifest file. Preferably, the plurality of requests 403a-c are for contiguous segments that form a continuous portion of the media content item so that playback of said portion can proceed once each requested segment is received at the client computing device 130, without requiring further requests for other segments to be transmitted.

Based on and in response to the requests 403a-c, the second server computer 112 generates a plurality of modified media content segments 404a-c. The second server computer 112 then responds to the requests 403a-c by sending the modified media content segments 404a-c to the client computing device 130.

Figure 7 is a schematic diagram illustrating interactions of the server system 110 in delivering media to the client computing device 130, according to another example. The example of Figure 7 provides more detail to the sending of requests and subsequent receipt of segments by the client computing device 110, as has been previously described in relation to blocks 330 and 340 of Figure 5.

As with the example of Figure 6, the client computing device 130 in the example of Figure 7 sends a request 501 to access a media content item to the first server computed 11. The first server computer 111 delegates the request to the second server computer 112, which in this example is a collection of servers, often referred to as a "server farm". The second server computer 112 provides a manifest file 502 corresponding to the media content item to the client computer device 130. In another example, the first server computer 111 may provide the manifest file and then delegate to the second server computer 112. Either way, the first server computer 111 can allocate resources according to loads on the various servers within the system 110 and, in particular, the server farm 112 and different servers can handle resource-heavy processes, such as generating modified media content segments.

Based on the manifest file, the client computing device 130 generates and transmits a plurality of requests 503a-c to the second server computer 112, each request identifying a media content segment identified in the manifest file and requesting a location identifier, such as a URL, for the associated segment.

The second server computer 112 generates a plurality of modified media content segments 504a-c based on and in response to the requests 503a-c, whereby the modified media content segments are modified versions of the content segments identified within the requests 503a-c.

In addition, the second server computer 112 provides responses 505a-c containing location identifiers (e.g. URLs) for each of the modified segments to the client computing device 130, where each response 505a-c corresponds to one of the requests 503a-c.

The client computing device 130 transmits requests 506a-c to the locations identified by the location identifiers 505a-c, the requests being for the corresponding modified media content segments. The destination of the requests 506a-c depends on where the modified content segments are stored, as indicated by the location identifiers 505a-c. When the second server 112 stores the modified content segments, the location identifiers 505a-c identify storage locations on the server 112, the requests 506a-c are directed to the second server computer 112 and the second server computer 112 delivers the modified content segments 504a-c to the client computing device 130.

Alternatively, when the modified content segments 504a-c are stored on a content delivery network (CDN) 160, the location identifiers 505a-c identify storage locations on the CDN 160 and the requests 506a-c are communicated directly to the CDN 160 rather than the second server computer 112, as depicted by the dashed arrows in Figure 7. The CDN 160 then delivers the modified content segments 504a-c to the client computing device 130 either directly or via the second server 112 or the first server 111 (again, depicted by dashed arrows). The CDN 160 is in communication with the second server computer 112 either directly or via the network 150 (Figure 4). A CDN can be used to replicate data of a media content item via a fast network to multiple file systems that may be physically located around the world, which is advantageous. Another benefit of a CDN is that when the requests 506a-c are made they can then be satisfied with less latency since the requests are routed to a physical location within the content delivery network 160 closest to the client computing device 130.

As the second server computer 112 represents a server farm, each of the submitted requests 503a-c, the modified segments 504a-c and the responses 505a-c can be handled and/or generated by different servers within the server farm 112 as a way to balance processing overheads.

Accordingly, the example of Figure 7 can be referred to as a two-cycle approach having: (i) a first response-request cycle consisting of the requests 503 for media content segments and the responses 505 returning respective location identifiers; and (ii) a second response-request cycle consisting of the requests 506 to the locations containing the content segments and the responses 504 containing the modified content segments. In contrast, the example of Figure 6 can be regarded as a one-cycle approach consisting of requests 403 for media content segments and responses 404 containing the modified media content segments themselves.

Although Figures 6 and 7 depict the requests, responses and segments being transmitted in parallel (at the same time) this is simply an illustration of an exemplary transmission method. In other instances, the transmission of the requests and segments could be staggered such that the requests and/or the segments are sent in a sequential manner.

### Pre-processing of a media content item

A media content item may be pre-processed prior to delivery to a client computing device in accordance with the example methods described in relation to Figures 2 and 5. The pre-processing may comprise segmentation of a source file of the media content item and, sometimes, distribution of copies of the segments to at least one server, such as a server within server system 110, for storage to pre-empt the server system 110 receiving an access request for said media content item. In some examples, a master file, as already mentioned, corresponding to the segmented source file is created and stored on at least one server of the server system 110 as part of the pre-processing. In one example, one or more servers of the server system 110 implement the pre-processing.

The segmentation may be adaptive to the characteristics (for example, technical properties) of the media content item such that the segments need not all be of the same duration. For example, the duration of segments may depend on an amount of time needed to modify the media content, which may vary from segment to segment. From a technical perspective, encoding and transfer speeds may influence the segmentation process. For instance, a shorter segment leads to a shorter start-up delay compared to a longer segment and an increase in efficiency of processor usage so may be preferable if quick play-back of the media content is desired. Longer segments reduce the number of requests and the size of an associated master file so may be preferable if there is a restricted bandwidth between the server system 110 and the client computing device 130. In one example, if media content warrants a higher bitrate, segment duration may be reduced to provide a more consistent segment encoding time. In another example, the duration of the segments may depend upon one or more characteristics of a scene formed by the segments and an associated processing task, for instance, from a dubbing perspective, whether a particular actor is present in the scene, or whether there is a lack of dialogue.

In some cases, as part of the pre-processing, the source file for video content is converted into a fragmented MP4 format, such that the converted source file comprises segments having temporal alignment across different bitrate versions of the file, for example, there may be a low/medium/high resolution representation of media for a given time period. In this way, the server system 110 can support adaptive bitrate streaming as a transmission method of delivering the file to the client computing device 130. For an MP4 file format, the duration of segments depends on the location(s) of keyframes (sometimes referred to as intra-"i"-frames) within the media content item. Keyframes are decodable in isolation from other frames of the media content item so the duration of segments that precede and succeed a keyframe is limited by its location. Accordingly, identification of key frames may be part of the pre-processing performed with respect to a media content item.

### The master file

As explained earlier, the master file contains identifiers and location information for multiple segments within a media content item. The location information indicates where each segment is stored. The master file is either generated as part of the pre-processing of a media content item or later, for example, in response to a client request to access a particular media content item.

The master file for a media content item is sometimes a static file irrespective of the particular client that has requested access to the corresponding media content item or the master file itself. In such a scenario, the master file delivered to a client is specific to a media content item yet identical to the master file delivered to all other clients for that media content item. In this case, the master file would preferably be placed on a CDN (160, Figure 7) to speed up access by the client.

In other instances, the master file is generated specifically in response to a request from a client, in such a way, that each client may receive a different master file. For instance, a previously created master file may be selectively edited, or a master file may be generated on-the-fly, dependent upon the requesting client. Either way, the content delivered to a client within the master file is customized to the needs (or, for example, authorization level) of that client, which restricts delivery of content to clients to only the necessary material, resulting in improved security of the content.

As an example, a master file may be redacted or edited or a bespoke version created for a client computing device requesting a video stream for dubbing because not all of the content of the media content items requires dubbing, for example, scenes in which no dialogue is spoken, or where the client requires only scenes featuring a certain character.

In a further example, a client-specific master file may be created based on the location of the requesting client 130. For example, the country from which the request is submitted can be used as basis for generating a localized version of the master file, such as a French version for a request received from France.

The generation and delivery of a client-specific master file is achieved in the same way as client requested media content segments, as described in relation to Figures 1-4; namely, the client 130 requests the media content item, the server system 110 creates a modified version of the master file based on information contained in, or derived from, recipient identification information. The modified master file is then sent to the client 130 by the server system 110.

### The media content item

In the examples described in relation to Figures 1-7, the media content item may comprise audio and/or video content. A media content item comprising both audio and video may be delivered using separate segments for audio content and video content, whereby a portion of the media content item is represented by two sets of segments: audio segments and video segments. For example, audio content for a first 20 seconds of a film may be delivered to a client computing device in a first set of segments and video content for the same 20 seconds of film may be delivered to the client computing device in a second set of segments, where the audio segment and the video segment relating to the same part of a media content item are individually identifiable by individual requests to the server system.

Processing tasks, such as dubbing, captioning, or subtitling, performed in relation to a portion of a media content item generate additional content, for example, text, to overlay a scene of the media content item at a particular time during playback. In such a scenario, the portion of the media content item is represented by three sets of segments: audio, video, and additional content segments. The additional content is delivered to a client computing device in a media content segment that is separate from or replaces (in the example of dubbing for audio) the video and audio segments. The delivery method for additional content may be via Dynamic Adaptive Steaming over HTTP (DASH) or HTTP Live Streaming (HLS).

In these scenarios, upon receipt of the audio, video and, if appropriate, additional content segments, the client computing device multiplexes the audio, video, and additional content segments together during playback so that they are synchronized.

### Authenticating a computing device

In some examples, the recipient of the media content, for example a user of the client computer device 130, is authenticated prior to the delivery of media content to said device 130. This increases the security of the media content by ensuring only authorised parties receive said content.

The authentication comprises the generation of a session that verifies the identity of the computing device 130 when it makes requests to either of the first server computer 111 and the second server computer 112. The session may be generated such that it has a predetermined lifetime that defines a window of time in which a user can access a media content item or segment thereof, which increases the security of the media content. Upon expiry of the predetermined lifetime, the user is no longer allowed to access a media content item, or a particular segment thereof, and sometimes cached modified segments of a particular content item are deleted which reduces the ongoing storage cost of the server system 110. After the expiry, the user is required to re-authenticate themselves with the server system 110.

In some examples, the media content is encrypted prior to being sent to the client computing device 130. In this way, the security of the media content is increased because any unauthorised party that intercepts the transmission is not able to generate an unencrypted version of the media content, thus the integrity of the media content is maintained.

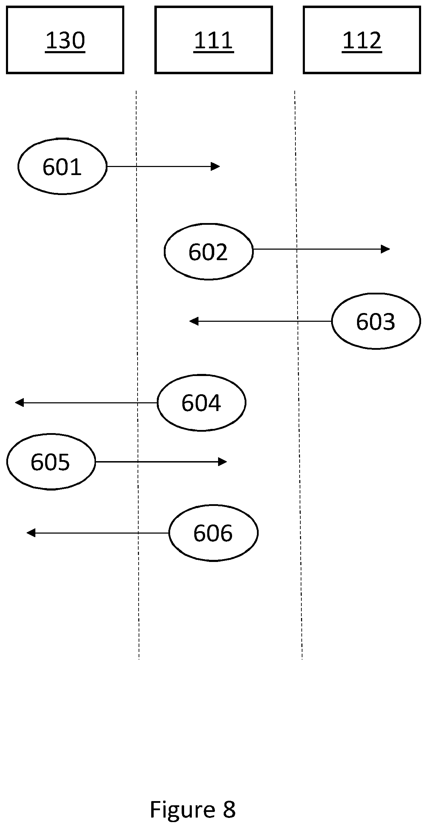

Figure 8 is a schematic representation of the interactions between the client computing device 130 and the server system 110 in generating a session.

. The client computing device 130 sends an authentication request 601 to the first server computer 111 and the first server computer 111 verifies the authentication information within the request 601. The request 601 also contains a session request.

After the user is authenticated, the first server computer 111 sends a request 602 to create a session to the second server computer 112. The second server computer 112 returns a session identifier 603 to the first server computer 111 and the first server computer 111 sends a session confirmation URL 604 to the client computing device 130. Optionally, the client computing device 130 sends a request 605 for confirmation of the session to the first server computer 111 and the first server computer 111 responds with a confirmation 606.

In some examples, the session generation process provides, as part of the request 601 and/or the response 603, identification information relating to the recipient of the media content, which forms the basis of modification of content segments, as discussed above in relation to the examples of Figures 2 and 5.

The various embodiments described herein are presented only to assist in understanding and teaching the claimed features. These embodiments are provided as a representative sample of embodiments only and are illustrative not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised, and modifications may be made without departing from the scope of the claimed invention. Various embodiments of the invention may suitably comprise, consist of, or consist essentially of, appropriate combinations of the disclosed elements, components, features, parts, steps, means, etc, other than those specifically described herein. Accordingly, reference in the specification to "an example" or similar language means that a particular feature, structure, or characteristic described in connection with the example is included in at least that one example, but not necessarily in other examples. Furthermore, equivalents and modifications not described above may also be employed. In addition, this disclosure may include other inventions not presently claimed, but which may be claimed in future.

## Claims

1. A server system for delivering media content to a client computing device of a recipient, wherein the server system is arranged to:
receive a request identifying a media content segment, of a media content item comprising a plurality of identifiable media content segments, the request comprising recipient identification information of the recipient;
in response to the request, modify the media content segment using the recipient identification information and thereby generate a modified version of the media content segment such that the modified version of the media content segment is attributable to the recipient; and
deliver the modified version of the media content segment to the client computing device.

2. The server system of claim 1, wherein the request is one of a plurality of requests, each identifying the recipient and a respective segment of the plurality of identifiable media content segments, received by the server system at the same time.

3. The server system of claim 1 or 2 arranged to:
generate the modified version of the media content segment by at least one of the following: watermarking; encryption; formatting; fingerprinting; and encoding the media content segment.

4. The server system of any preceding claim, wherein the recipient identification information comprises at least one of: an identifier of the computing device, a domain containing the computing device, a geolocation of the computing device, an IP address of the computing device, an identifier of a user of the computing device, and/or an organization to which the user of the device is affiliated.

5. The server system of any preceding claim, arranged to:
receive, from the client computing device, a request to access the media content item; and
provide a master file to the client computing device, the master file comprising identifiers of the plurality of identifiable media content segments that can be requested.

6. The server system of any preceding claim, arranged to:
process the media content item to generate the plurality of identifiable media content segments.

7. A method of delivering media content to a computing device of a recipient, the method comprising:
receiving, at a server system, a request identifying a media content segment of a media content item comprising a plurality of identifiable media content segments, and comprising recipient identification information of the recipient;
in response to the request, modifying, by the server system, the media content segment using the recipient identification information to thereby generate a modified version of the media content segment that is attributable to the recipient; and
delivering, by the server system, the modified version of the media content segment to the client computing device.

8. The method of claim 7, wherein the request is one of a plurality of requests, each identifying the recipient and a respective segment of the plurality of identifiable media content segments, received by the server system and wherein the method further comprises:
generating a modified version of at least one of the plurality of identifiable media content segments.

9. The method 7 or 8, further comprising:
generating the modified version of the media content segment by at least one of the following: watermarking; encryption; formatting; fingerprinting; and encoding the media content segment.

10. The method of any of claims 7 to 9, further comprising:
receiving, by the server system from the client computing device, a request to access a media content item; and
transmitting, by the server system to the client computing device, a plurality of identifiers identifying respective media content segments forming the media content item and a master file comprising an order thereof.

11. The method of any of claims 7 to 10, further comprising, as the server system delivers the modified version of the media content item:
receiving, at the server system, a second request identifying a second media content segment of the media content item.

12. The method of any of claims 7 to 11, wherein the delivering comprises:
streaming the modified media content segment via adaptive bitrate streaming.

13. A computer readable medium comprising computer readable instructions that, when executed by a processor, cause the processor to implement the method of any of claims 7 to 12.
